# EUROPÄISCHE PATENTANMELDUNG

(11) **EP 4 403 240 A1**
(43) Veröffentlichungstag der Anmeldung: **24.07.2024**
(21) Anmeldenummer: 24151183.1
(22) Anmeldetag: 10.01.2024
(51) Int. Cl.: B01D 33/21, B01D 33/46

(54) **ROTATIONSSCHEIBENFILTER ZUR FILTRATION VON ABWASSER SOWIE SPRITZDÜSE FÜR EINEN ROTATIONSSCHEIBENFILTER**

(30) Priorität: 17.01.2023 DE 102023101027
(71) Anmelder: Huber SE, 92334 Berching (DE)
(72) Erfinder: Flierl, Simon, 92339 Beilngries (DE)
(74) Vertreter: Canzler & Bergmeier Patentanwälte Partnerschaft mbB

(57) **Zusammenfassung**

Die Erfindung betrifft einen Rotationsscheibenfilter mit einer Trommel (2) und nebeneinander und um die Trommel (2) angeordneten Filterscheiben (3), die gemeinsam mit dieser in eine Drehbewegung versetzbar sind, wobei jede Filterscheibe (3) jeweils einen durch Filterflächen (4) zumindest teilweise begrenzten inneren Hohlraum (5) aufweist, wobei die Hohlräume (5) der Filterscheiben (3) mit der Trommel (2) in Fluidverbindung stehen, so dass das zu filtrierende Abwasser ausgehend vom Inneren der Trommel (2) in die Hohlräume (5) und das Filtrat von dort über die Filterflächen (4) nach außen strömen kann, wobei der Rotationsscheibenfilter eine Spritzdüsenanordnung (6) mit Spritzdüsenrohren (8) und an den Spritzdüsenrohren (8) befestigte Spritzdüsen (9) umfasst. Erfindungsgemäß ist vorgesehen, dass die Spritzdüsen (9) jeweils zwei Spritzdüsenabschnitte (11) mit jeweils zumindest einem Düsenkopf (12) sowie eine formschlüssige Verbindung (13) umfassen, mit deren Hilfe die Spritzdüsenabschnitte (11) mit den Spritzdüsenrohren (8) verbunden sind, wobei die Spritzdüsen (9) nach Lösen der formschlüssigen Verbindung (13) von dem jeweiligen Spritzdüsenrohr (8) entfernt werden können. Darüber hinaus wird eine Spritzdüse (9) für einen Rotationsscheibenfilter vorgeschlagen.

## Beschreibung

Die vorliegende Erfindung betrifft einen Rotationsscheibenfilter zur Filtration von Abwasser, wobei der Rotationsscheibenfilter eine um eine Drehachse drehbar gelagerte Trommel aufweist. Der Rotationsscheibenfilter umfasst zudem eine Vielzahl von nebeneinander und um die Trommel angeordnete Filterscheiben, die an der Trommel befestigt und gemeinsam mit dieser mit Hilfe einer Antriebseinrichtung des Rotationsscheibenfilters in eine Drehbewegung versetzbar sind. Jede Filterscheibe weist jeweils einen durch Filterflächen zumindest teilweise begrenzten inneren Hohlraum auf, wobei die Hohlräume der Filterscheiben mit der Trommel in Fluidverbindung stehen, so dass das zu filtrierende Abwasser ausgehend vom Inneren der Trommel in die Hohlräume und das Filtrat von dort über die Filterflächen nach außen strömen kann. Ferner weist der Rotationsscheibenfilter eine Spritzdüsenanordnung zur Reinigung einer dem jeweiligen Hohlraum abgewandten Außenseite der Filterflächen auf, wobei die Spritzdüsenanordnung Spritzdüsenrohre umfasst, die sich während des Betriebs der Spritzdüsenanordnung zumindest zeitweise zwischen jeweils zwei benachbarte Filterscheiben erstrecken. Die Spritzdüsenrohre umfassen jeweils mehrere Spritzdüsen, mit deren Hilfe während des Betriebs der Spritzdüsenanordnung eine den Spritzdüsenrohren zugeführte Reinigungsflüssigkeit auf die der jeweiligen Spritzdüse zugewandte Außenseite einer Filterfläche gespritzt werden kann.

Darüber hinaus wird eine Spritzdüse für einen Rotationsscheibenfilter beschrieben.

Ein gattungsgemäßer Rotationsscheibenfilter ist beispielsweise aus der DE 10 2020 117 493 A1 oder der DE 10 2014 103 831 A1 bekannt. Entsprechende Rotationsscheibenfilter, und das gilt auch für den Rotationsscheibenfilter gemäß vorliegender Erfindung, dienen beispielsweise dem Entfernen von Feststoffen aus Abwässern.

Prinzipiell umfasst der Rotationsscheibenfilter ein Behältnis, in dem die einzelnen Filterscheiben benachbart zueinander auf der Trommel angeordnet sind. Die Trommel ist mit Hilfe eines Antriebs (vorzugsweise in Form eines Elektromotors) und gemeinsam mit den einzelnen Filterscheiben um ihre Längsachse (= Drehachse) antreibbar. Wird nun das zu reinigende Abwasser in die Trommel geleitet, so strömt es anschließend von innen nach außen durch die Filterflächen der einzelnen Filterscheiben. Im Abwasser vorhandene Feststoffe werden hierbei von den Filterflächen der Filterscheiben zurückgehalten, wobei der Abscheidungsgrad der Feststoffe von den Eigenschaften der Filterflächen abhängt. Vorzugsweise bestehen die Filterflächen aus einem Filtervlies, einem Gewebe (aus Kunststoff oder Metall) oder einem Polstoff (dies gilt auch für den vorliegenden Rotationsscheibenfilter). Das auf den Außenseiten der Filterscheiben austretende Filtrat wird schließlich aus dem Rotationsscheibenfilter abgeführt.

Wie in der DE 10 2014 103 831 A1 beschrieben, können Spritzdüsenanordnungen zum Einsatz kommen, mit deren Hilfe die den jeweiligen Hohlräumen abgewandten Außenseiten der Filterflächen mit einer Reinigungsflüssigkeit bespritzbar sind, um das Filtermaterial im Gegenstrom zu reinigen. Die Flüssigkeit wird also von außen auf die Filterflächen aufgespritzt und durchdringt diese in Richtung der jeweiligen Hohlräume, während das Filtrat im Laufe der Filtration ausgehend von den Hohlräumen nach außen durch die Filterflächen tritt. Die Spritzdüsenanordnungen können einen oder mehrere Spritzdüsen umfassen, die auf eine oder mehrere Filterscheiben gerichtet sind und mit deren Hilfe die Reinigungsflüssigkeit, beispielsweise in Form des Filtrats oder von außen zugeführtem Wasser, auf die Filterscheiben gespritzt werden kann.

Hierbei ist es bekannt, dass jeweils mehrere Spritzdüsenabschnitte mit einem Spritzdüsenrohr verbunden sind, über die den Spritzdüsenabschnitten die Reinigungsflüssigkeit zugeführt wird. Die Spritzdüsenabschnitte sind hierbei unlösbar an dem Spritzdüsenrohr befestigt bzw. nicht ohne Beschädigung von diesem zu entfernen. Die Wartung gestaltet sich daher in der Regel recht aufwändig.

Aufgabe der vorliegenden Erfindung ist es, eine wartungsfreundliche Spritzdüse sowie einen damit ausgerüsteten Rotationsscheibenfilter vorzuschlagen.

Die Aufgabe wird gelöst durch einen Rotationsscheibenfilter sowie eine Spritzdüse mit den Merkmalen der unabhängigen Patentansprüche.

Wie oben bereits ausgeführt, umfasst der Rotationsscheibenfilter eine Vielzahl von Spritzdüsenrohren, über die eine Reinigungsflüssigkeit den einzelnen Spritzdüsen zugeführt werden kann, um die Außenseiten der Filterscheiben im Gegenstromverfahren, d.h. von außen nach innen, zu reinigen. Die Reinigungsflüssigkeit (z.B. Wasser oder beim Betrieb des Rotationsscheibenfilters anfallendes Filtrat) strömt beim Betrieb der Spritzdüsenanordnung vom Spritzdüsenrohr kommend durch die mit dem Spritzdüsenrohr verbundenen Spritzdüsenabschnitte der Spritzdüsen, die einen Düsenkopf aufweisen, von dort zu den jeweiligen Düsenköpfen und trifft schließlich nach Verlassen der Düsenköpfe auf eine Außenseite einer der Filterflächen.

Vorzugsweise umfasst der Rotationsscheibenfilter mehrere Spritzdüsenrohre, wobei jeweils ein Spritzdüsenrohr zwischen zwei benachbarte Filterscheiben ragt. Die Spritzdüsenrohre können dabei derart gelagert sein, dass sie von einer Reinigungsstellung zwischen zwei benachbarten Filterscheiben in eine Parkposition bewegt, vorzugsweise verschwenkt, werden können, in der sie nicht zwischen benachbarte Filterscheiben ragen. Jeweils auf der den übrigen Filterscheiben abgewandten Außenseite der ersten und letzten Filterscheibe des Rotationsscheibenfilters kann zudem ein Spritzdüsenrohr angeordnet sein, welches Spritzdüsen umfasst, die konstruktiv von den zwischen den Filterscheiben angeordneten Spritzdüsen abweichen, da hier nur eine Filterfläche bespritzt werden muss. Die folgende Beschreibung bezieht sich daher lediglich auf die Spritzdüsen, welche an Spritzdüsenrohren angeordnet sind, welche zwischen zwei benachbarte Filterscheiben bewegt werden können bzw. ständig dort angeordnet sind.

Vorzugsweise sind mehrere Spritzdüsenrohre vorhanden, welche mit einer oder mehreren zentralen Zuleitungen für die Zufuhr der Reinigungsflüssigkeit verbunden sind. Die zentrale(n) Zuleitung(n) kann/können sich beispielsweise parallel zur Drehachse der Trommel erstrecken. Ferner sollte(n) die zentrale(n) Zuleitung(en) mit einem Pumpaggregat, beispielsweise einer Flüssigkeitspumpe, verbunden sein, mit deren Hilfe die Reinigungsflüssigkeit durch die zentrale(n) Zuleitung(n) zu den einzelnen Spritzdüsenrohren gefördert werden kann.

Erfindungsgemäß zeichnet sich der Rotationsscheibenfilter zunächst dadurch aus, dass die Spritzdüsen jeweils wenigstens (vorzugsweise genau) zwei Spritzdüsenabschnitte umfassen, wobei zumindest ein Teil der Spritzdüsenabschnitte einen Düsenkopf aufweist, wobei die Spritzdüsen eine formschlüssige Verbindung umfassen, mit deren Hilfe die Spritzdüsenabschnitte mit den Spritzdüsenrohren verbunden sind.

Bei den Spritzdüsenabschnitten einer Spritzdüse handelt es sich um separate Bauteile, die gleichartig oder unterschiedlich ausgebildet sein können. Vorzugsweise sind die Spritzdüsenabschnitte gleichartig und als Spritzdüsenarm ausgebildet, wobei jeder Spritzdüsenarm jeweils einen Düsenkopf aufweist.

Ebenso ist es denkbar, dass nur einer der mehreren Spritzdüsenabschnitte einer Spritzdüse einen Düsenkopf umfasst. Möglich ist beispielsweise, dass die Spritzdüse zwei Spritzdüsenabschnitte aufweist, von denen lediglich einer als Spritzdüsenarm mit Düsenkopf ausgebildet ist. Der zweite Spritzdüsenabschnitt weist schließlich lediglich einen oder mehrere der nachfolgend noch näher beschriebenen Abschnitte der formschlüssigen Verbindung auf und dient damit nicht dem Austritt von Reinigungsflüssigkeit, sondern lediglich der Verbindung der Spritzdüse mit dem Spritzdüsenrohr bzw. der Stabilität der Spritzdüse.

Beispielsweise könnten derart ausgebildete Spritzdüsen an den Spritzdüsenrohren angeordnet sein, die den Außenseiten der beiden jeweils äußersten Filterscheiben des Rotationsscheibenfilters zugeordnet sind, da hier jeweils nur eine Filterscheibe mit Reinigungsflüssigkeit bespritzt werden muss.

Die Spritzdüsenabschnitte, die als Spritzdüsenarme ausgebildet sind, ragen hierbei vom jeweiligen Spritzdüsenrohr gesehen nach außen und münden schließlich in den Düsenköpfen. Die Reinigungsflüssigkeit strömt somit beim Betrieb der Spritzdüsenanordnung ausgehend von jeweils einem Spritzdüsenrohr über die mit diesem verbundenen Spritzdüsenarme bis zum jeweiligen Düsenkopf und verlässt dort die Spritzdüsenanordnung in Richtung der Außenseiten der einzelnen Filterscheiben.

Erfindungsgemäß ist nun eine formschlüssige Verbindung vorhanden, mit deren Hilfe jeweils zwei Spritzdüsenabschnitte, d.h. die Spritzdüsenabschnitte einer Spritzdüse, mit einem der zahlreichen Spritzdüsenrohre verbunden sind. Der Formschluss wird beispielsweise durch das Ineinandergreifen von mindestens zwei Abschnitten der beiden Spritzdüsenabschnitte einer Spritzdüse oder jeweils eines Abschnitts eines Spritzdüsenabschnitts und eines korrespondierenden Abschnitts des Spritzdüsenrohrs erreicht. Die formschlüssige Verbindung kann also zwischen den Spritzdüsenabschnitten untereinander (siehe die folgende Beschreibung) oder auch zwischen jeweils einem Spritzdüsenabschnitt und dem mit dem Spritzdüsenabschnitt in Verbindung stehenden Spritzdüsenrohr erfolgen. In jedem Fall sind Verbindungsabschnitte vorhanden, welche direkt oder indirekt eine formschlüssige Verbindung zwischen den beiden Spritzdüsenabschnitten einer Spritzdüse und jeweils einem Spritzdüsenrohr bewirken.

Ebenso ist es denkbar, dass die formschlüssige Verbindung zusätzlich oder alternativ zu Abschnitten eines Spritzdüsenrohrs und/oder eines oder mehrerer Spritzdüsenabschnitte separate Elemente umfasst, welche die formschlüssige Verbindung bewirken. Hierzu zählen beispielsweise Stifte, Bolzen oder Nieten. Auf Schrauben kann daher vollständig verzichtet werden.

Besonders bevorzugt ist eine formschlüssige Verbindung, welche ohne ein Werkzeug, d.h. lediglich per Hand, gelöst werden kann, so dass die Spritzdüsenabschnitte der einzelnen Spritzdüsen schnell und einfach mit einem Spritzdüsenrohr verbunden oder wieder von diesem getrennt werden können. Insbesondere kommen für die formschlüssige Verbindung die im Folgenden noch näher beschriebenen Rast- oder Schnappverbindungen zum Einsatz.

In jedem Fall ist die formschlüssige Verbindung derart ausgebildet, dass die Spritzdüsen nach Lösen der formschlüssigen Verbindung von dem jeweiligen Spritzdüsenrohr entfernt werden können.

Ferner ist es vorteilhaft, wenn jeweils zwei Spritzdüsenabschnitte mit Hilfe der formschlüssigen Verbindung zu einer Einheit zusammengefasst sind. Beispielsweise wäre es denkbar, dass jeweils zwei Spritzdüsenabschnitte über formschlüssige Verbindungselemente zu der genannten Einheit verbunden sind. Auch wäre es denkbar, dass die Spritzdüsenrohre Verbindungsabschnitte aufweisen, welche gleichzeitig mit beiden Spritzdüsenabschnitten einer Spritzdüse verbunden sind, so dass die genannte Einheit entsteht.

Von Vorteil ist es insbesondere, wenn die Spritzdüsenabschnitte einer Spritzdüse jeweils als Spritzdüsenarme ausgebildet sind und jeweils einen Düsenkopf aufweisen. Die Spritzdüsenarme stehen vorzugsweise bezüglich des die Spritzdüsenarme tragenden Spritzdüsenrohrs in gegenüberliegende Richtungen von dem Spritzdüsenrohr ab.

Generell sollten die Spritzdüsenabschnitte bzw. die mit den als Spritzdüsenarm ausgebildeten Spritzdüsenabschnitten verbundenen Düsenköpfe derart ausgerichtet sein, dass jeweils ein Düsenkopf einer Spritzdüse die Außenseite einer ersten Filterscheibe und der zweite Düsenkopf der Spritzdüse die Außenseite einer zweiten Filterscheibe, welche der ersten Filterscheibe benachbart ist, bespritzt. Beim Betrieb der Spritzdüsenanordnung sind also die Spritzdüsen derart zwischen zwei Filterscheiben angeordnet, dass die beiden Düsenköpfe einer Spritzdüse gegenüberliegende Außenseiten zweier Filterscheiben bespritzen und damit reinigen. Wie zu Beginn bereits ausgeführt, gilt dies nicht für die Spritzdüsen, welche die erste und letzte Filterscheibe jeweils auf der Außenseite bespritzen, die den übrigen Filterscheiben abgewandt ist.

Ebenso ist es denkbar, dass jede Spritzdüse nur einen Düsenkopf umfasst, wobei in diesem Fall pro Spritzdüsenrohr mehrere solcher Spritzdüsen derart angeordnet sind, dass beim Betrieb der Spritzdüsenanordnung ein erster Teil der Spritzdüsen eine erste der beiden dem Spritzdüsenrohr benachbarten Filterscheiben mit Reinigungsflüssigkeit bespritzt, während die zweite der genannten Filterscheiben vom zweiten Teil der Spritzdüsen bespritzt wird. Vorzugsweise sind die Spritzdüsen des ersten Teils und die Spritzdüsen des zweiten Teils alternierend am Spritzdüsenrohr befestigt.

Ebenso bringt es Vorteile mit sich, wenn die Spritzdüsenabschnitte einer Einheit mit Hilfe der formschlüssigen Verbindung direkt miteinander verbunden sind, sich also gegenseitig berühren. Die formschlüssige Verbindung dient in diesem Fall nicht nur der Verbindung der Spritzdüsenabschnitte mit dem jeweiligen Spritzdüsenrohr. Vielmehr sind auch die Spritzdüsenabschnitte einer Einheit direkt mit Hilfe der formschlüssigen Verbindung miteinander verbunden und stehen damit in direktem Kontakt. Die formschlüssige Verbindung kann hierbei Abschnitte aufweisen, welche sich in Umfangsrichtung um ein Spritzdüsenrohr erstrecken, wobei sich die Abschnitte beider Spritzdüsenabschnitte berühren und derart ausgeformt sind, dass sich die formschlüssige Verbindung ergibt.

Vorteile bringt es zudem mit sich, wenn die formschlüssige Verbindung durch einen Rastmechanismus gebildet ist. Der Rastmechanismus umfasst einen Rastabschnitt, der Bestandteil einer ersten der beiden Spritzdüsenabschnitte einer Einheit ist. Ferner umfasst der Rastmechanismus einen Halteabschnitt, der Bestandteil des zweiten Spritzdüsenabschnitts der Einheit ist. Der Rastabschnitt und der Halteabschnitt wirken zusammen, d.h. greifen ineinander, und bilden gemeinsam die formschlüssige Verbindung. Sowohl der Rastabschnitt als auch der Halteabschnitt sind hierbei Bestandteil jeweils eines Spritzdüsenabschnitts, wobei der Rastabschnitt an einem ersten Spritzdüsenabschnitt und der Halteabschnitt an einem zweiten Spritzdüsenabschnitt der jeweiligen Spritzdüse angeordnet sind. Zudem greifen der Rastabschnitt und der Halteabschnitt formschlüssig derart ineinander, dass die beiden Spritzdüsenabschnitte einer Spritzdüse formschlüssig verbunden sind. Die Spritzdüsenabschnitte der Einheit sind vorzugsweise mit Hilfe des Rastmechanismus gegen das die Einheit tragende Spritzdüsenrohr gepresst. Wird nun der Rastabschnitt per Hand vom Halteabschnitt entfernt, bis beide Abschnitte außer Eingriff miteinander gebracht sind, so ist die formschlüssige Verbindung gelöst und beide Spritzdüsenabschnitte können vom Spritzdüsenrohr entfernt werden.

Ebenso ist es vorteilhaft, wenn jeder Spritzdüsenabschnitt wenigstens einen, vorzugsweise mehrere, Rastabschnitte und einen, vorzugsweise mehrere, Halteabschnitte umfasst, wobei der bzw. die Rastabschnitte des ersten Spritzdüsenabschnitts einer Einheit mit der bzw. den Halteabschnitten des zweiten Spritzdüsenabschnitts zusammenwirkt bzw. zusammenwirken, und wobei der bzw. die Rastabschnitte des zweiten Spritzdüsenabschnitts der Einheit mit dem bzw. den Halteabschnitten des ersten Spritzdüsenabschnitts zusammenwirkt bzw. zusammenwirken. Eine Einheit umfasst also zwei Spritzdüsenabschnitte, wobei jeder Spritzdüsenabschnitt sowohl mindestens einen Halteabschnitt und mindestens einen Rastabschnitt aufweist. Der oder die Rastabschnitte des ersten Spritzdüsenabschnitts wirken hierbei mit dem oder den Halteabschnitten des zweiten Spritzdüsenabschnitts zusammen und umgekehrt. Vorzugsweise liegen der oder die Rastabschnitte dem oder den Halteabschnitten desselben Spritzdüsenabschnitts bezüglich des Spritzdüsenrohrs gegenüber, d.h. der oder die Halteabschnitte und der oder die Rastabschnitte eines Spritzdüsenabschnitts befinden sich auf unterschiedlichen Seiten des die Spritzdüsenabschnitte tragenden Spritzdüsenrohrs. Insbesondere ist es von Vorteil, wenn die genannten Abschnitte der Spritzdüsenabschnitte das die Spritzdüsenabschnitte tragende Spritzdüsenrohr in Umfangsrichtung umschließen bzw. umklammern. Die Spritzdüsenabschnitte können hierfür halbschalenförmige Bereiche aufweisen, die insbesondere direkt am Spritzdüsenrohr anliegen. Vorzugsweise umschließt jeweils eine Einheit ein Spritzdüsenrohr in Umfangsrichtung vollständig.

Um ein Verschieben einer Einheit in Längsrichtung eines Spritzdüsenrohrs bzw. des die Einheit tragenden Abschnitts desselben oder ein Verdrehen der Einheit in Umfangsrichtung des Spritzdüsenrohrs zu verhindern, ist es zudem von Vorteil, wenn insbesondere die Spritzdüsenabschnitte, die einen Düsenkopf umfassen (alternativ auch alle Spritzdüsenabschnitte) eine Ausbuchtung, z.B. in Form eines Stutzens, aufweisen, der in eine korrespondierende Öffnung des Spritzdüsenrohrs ragt. Der Stutzen kann einen inneren Durchgang besitzen, über den die Spritzdüsenflüssigkeit vom Spritzdüsenrohr in den Spritzdüsenabschnitt tritt. Die Spritzdüsenabschnitte, die einen Stutzen aber keinen Düsenkopf aufweisen, können einen geschlossenen Stutzen aufweisen, der dem Abdichten des jeweiligen Spritzdüsenabschnitts gegenüber einer Öffnung im Spritzdüsenrohr, nicht aber dem Transport von Reinigungsflüssigkeit dient.

Vorteilhaft ist es, wenn zumindest ein Spritzdüsenabschnitt einer jeden Spritzdüse jeweils einen von dem Spritzdüsenrohr, mit dem er verbunden ist, abstehenden Armabschnitt aufweist, wobei der entsprechende Spritzdüsenabschnitt einteilig ausgebildet ist und den Armabschnitt, einen oder mehrere Rastabschnitte und/oder einen oder mehrere Halteabschnitte umfasst, und wobei der Armabschnitt mit einem der Düsenköpfe verbunden ist. Es ist also von Vorteil, wenn jede Spritzdüse lediglich zwei Spritzdüsenabschnitte sowie einen oder zwei Düsenköpfe umfasst (je nachdem, ob nur ein Spritzdüsenabschnitt oder beide Spritzdüsenabschnitte einer Spritzdüse einen Düsenkopf aufweisen). Die Spritzdüsenabschnitte können hierbei als einteiliges Spritzgussteil aus Kunststoff gefertigt sein. Falls nötig, kann die Spritzdüse noch ein oder mehrere Dichtelemente, z.B. Dichtringe, aufweisen, wobei die Dichtelemente zwischen jeweils einem Armabschnitt und einem Düsenkopf und/oder zwischen einem Spritzdüsenabschnitt und dem den Spritzdüsenabschnitt tragenden Spritzdüsenrohr angeordnet sein können, um ein ungewolltes Austreten von Spritzflüssigkeit zu verhindern.

Vorteilhaft ist es zudem, wenn sich der Rastabschnitt und/oder der Halteabschnitt, insbesondere ausgehend vom Armabschnitt, in Umfangsrichtung um einen Abschnitt eines der Spritzdüsenrohre erstreckt. Das Spritzdüsenrohr wird hierdurch ganz oder zumindest über einen Teil seines Umfangs von den Spritzdüsen bzw. von dem oder den Rastabschnitten und/oder dem oder den Halteabschnitten umklammert, was eine besonders stabile Verbindung zwischen den Spritzdüsen und den Rohrabschnitten des jeweiligen Spritzdüsenrohrs gewährleistet.

Vorteilhaft ist es ebenso, wenn der Rastabschnitt durch einen Rasthaken gebildet ist. Der Rasthaken rastet beim Herstellen der formschlüssigen Verbindung in dem Halteabschnitt ein. Insbesondere sollten die Rasthaken und die Halteabschnitte derart relativ zum jeweiligen Spritzdüsenrohr ausgerichtet sein, dass jeweils zwei Spritzdüsenabschnitte zu einer Einheit verbunden werden können, wenn die beiden Spritzdüsenabschnitte von unterschiedlichen Seiten in Richtung des Spritzdüsenrohrs aufeinander zu bewegt werden, bis der oder die Rastabschnitte mit dem oder den korrespondierenden Halteabschnitten in Wirkverbindung gelangen und hierbei die formschlüssige Verbindung bilden.

Besonders vorteilhaft ist es, wenn der Rastabschnitt einen, vorzugsweise vom Spritzdüsenrohr abstehende, Betätigungsabschnitt aufweist, mit dessen Hilfe der Rastabschnitt händisch vom Halteabschnitt wegbewegt werden kann, um die formschlüssige Verbindung durch die Bewegung des Betätigungsabschnitts zu lösen. Insbesondere steht der Betätigungsabschnitt derart nach außen weg, dass er von einem Finger kontaktiert und vom Spritzdüsenrohr wegbewegbar ist. Der Rastabschnitt gerät hierbei außer Eingriff mit dem Halteabschnitt, wodurch die formschlüssige Verbindung letztendlich gelöst wird. Nach Lösen der Verbindung können die Spritzdüsenabschnitte der jeweiligen Spritzdüsen von dem Spritzdüsenrohr, mit dem sie zuvor verbunden waren, entfernt werden, ohne dass hierfür weitere Verbindungen gelöst werden müssten.

Ebenso bringt es Vorteile mit sich, wenn jeweils ein Düsenkopf mit einem Spritzdüsenabschnitt, der vorzugsweise als Spritzdüsenarm ausgebildet ist, verschraubt, mit diesem über einen Clipsmechanismus verbunden oder mit diesem verpresst, vorzugsweise in diesen eingepresst, ist. Insbesondere ein Clipsmechanismus erlaubt eine einfache und schnelle Verbindung des Düsenkopfs mit dem jeweiligen Spritzdüsenabschnitt. Ebenso kann die Verbindung leicht und ohne Werkzeug wieder gelöst werden, wenn ein Düsenkopf ausgetauscht werden soll.

Vorteilhaft ist es, wenn jede Spritzdüse ausschließlich zwei, jeweils einteilige, Spritzdüsenabschnitte, ein oder zwei Düsenköpfe und mehrere Dichtelemente umfasst, wobei jeweils ein Dichtelement zwischen dem jeweiligen Spritzdüsenabschnitt und dem Spritzdüsenrohr und jeweils ein Dichtelement zwischen dem jeweiligen Spritzdüsenabschnitt und dem mit diesem verbundenen Düsenkopf angeordnet ist. Wie bereits oben erwähnt, können die Spritzdüsenabschnitte als Spritzgussteil gefertigt sein. Der Aufbau der Spritzdüsen ist hierdurch relativ einfach gehalten, so dass die Herstellungskosten im Vergleich zum Stand der Technik gering ausfallen. Ebenso ist die Montage und Demontage der Spritzdüsen einfach und ohne Werkzeug möglich.

Auch ist es äußert vorteilhaft, wenn die formschlüssige Verbindung durch eine Spannverriegelung gebildet ist, wobei die Spannverriegelung pro Einheit einen, vorzugsweise mehrere, Spannarme und einen, vorzugsweise mehrere, Vorsprünge umfasst. Jeweils zumindest ein Spannarm steht mit wenigstens einem Vorsprung in Eingriff. Vorzugsweise werden die Spritzdüsenabschnitte der Einheit durch das Zusammenwirken der Spannarme mit den Vorsprüngen gegen das die Einheit tragende Spritzdüsenrohr gepresst. In jedem Fall dient die Spannverriegelung der Verbindung der Spritzdüsenabschnitte mit jeweils einem Spritzdüsenrohr. Insbesondere ist es auch hier von Vorteil, wenn jeweils zwei Spritzdüsenabschnitte zu einer Einheit verbunden werden, wobei die Verbindung auch hier über die formschlüssige Verbindung realisiert sein kann. Die Spannverriegelung ist derart ausgebildet, dass der Spannarm beim Herstellen der formschlüssigen Verbindung mit dem Vorsprung in Kontakt gebracht wird. Anschließend wird der Spannarm noch ein Stück weiterbewegt, bis er eine Endstellung eingenommen hat, in der er unter einer gewissen Spannung steht und hierbei den ersten Spritzdüsenabschnitt einer Einheit gegen den zweiten Spritzdüsenabschnitt derselben Einheit zieht. Der Spannarm kann schließlich wieder gelöst werden, indem der Spannarm in eine Richtung bewegt wird, die der Richtung beim Herstellen der formschlüssigen Verbindung entgegen gerichtet ist. Anschließend können die Spritzdüsenabschnitte vom Spritzdüsenrohr entfernt werden.

Vorteile bringt es zudem mit sich, wenn die Spannverriegelung einen Federmechanismus aufweist, mit dessen Hilfe die Spannverriegelung unter Spannung gehalten wird, wobei die Spannverriegelung unter Überwindung der Federkraft des Federmechanismus geöffnet werden kann. Sowohl beim Herstellen als auch Lösen der formschlüssigen Verbindung muss die Federkraft überwunden werden, wobei die Federkraft nach Herstellung der formschlüssigen Verbindung sicherstellt, dass die Spannverriegelung nur durch Überwindung der Federkraft wieder gelöst werden kann. Der Federmechanismus stellt also sicher, dass die Spritzdüsenabschnitte beim Betrieb der Spritzdüsenanordnung sicher an dem die Spritzdüsenabschnitte tragenden Spritzdüsenrohr befestigt sind.

Vorteilhaft ist es zudem, wenn jeder Spannarm einer Einheit einen Spannarm und einen Vorsprung aufweist, wobei der Spannarm des ersten Spritzdüsenabschnitts der Einheit mit einem Vorsprung der zweiten Einheit und der Spannarm des zweiten Spritzdüsenabschnitts der Einheit mit einem Vorsprung der ersten Einheit in Wirkverbindung steht. Jede Spritzdüse umfasst in diesem Fall wenigstens zwei formschlüssige Verbindungen, mit deren Hilfe die beiden Spritzdüsenabschnitte gegeneinander gezogen und hierbei auch gegen das entsprechende Spritzdüsenrohr gepresst werden. Vorzugsweise sind die beiden Spannarme auf gegenüberliegenden Seiten des Spritzdüsenrohrs angeordnet. Gleiches gilt für die beiden Vorsprünge.

Besonders vorteilhaft ist es also, wenn die Spannarme einer Einheit auf gegenüberliegenden Seiten des die Einheit tragenden Spritzdüsenrohrs angeordnet sind und/oder dass die Vorsprünge einer Einheit auf gegenüberliegenden Seiten des die Einheit tragenden Spritzdüsenrohrs angeordnet sind. Ebenso ist es von Vorteil, wenn die Rastabschnitte einer Einheit auf gegenüberliegenden Seiten des die Einheit tragenden Spritzdüsenrohrs angeordnet sind und/oder wenn die Halteabschnitte einer Einheit auf gegenüberliegenden Seiten des die Einheit tragenden Spritzdüsenrohrs angeordnet sind. In diesen Fällen erfolgt eine relativ gleichmäßige Krafteinleitung von den Spritzdüsenabschnitten in Richtung des zwischen den Spritzdüsenabschnitten einer Einheit angeordneten Spritzdüsenrohrs. Die zwei Spritzdüsenabschnitte einer Einheit umklammern in diesem Fall das Spritzdüsenrohr.

Darüber hinaus betrifft die Erfindung eine Spritzdüse für einen Rotationsscheibenfilter, der der Filtration von Abwasser dient und vorzugsweise ein oder mehrere der oben und/oder nachfolgend (auch in der Figurenbeschreibung) genannten Merkmale des Rotationsscheibenfilters umfasst. Erfindungsgemäß ist vorgesehen, dass die Spritzdüse ein oder mehrere zuvor oder nachfolgend beschriebene Merkmale der Spritzdüse aufweist. Die Merkmale, die sich auf die Spritzdüse beziehen, können einzeln oder in beliebiger Kombination verwirklicht werden, solange keine technischen Widersprüche entstehen.

Weitere Vorteile der Erfindung sind in den nachfolgenden Ausführungsbeispielen beschrieben. Es zeigen, jeweils schematisch:
- **Figur 1**: ausgewählte Bestandteile eines Rotationsscheibenfilters,
- **Figur 2**: ein erfindungsgemäßes Ausführungsbeispiel eines Abschnitts eines die Spritzdüsen tragenden Spritzdüsenrohrs,
- **Figur 3**: eine erfindungsgemäße Einheit, umfassend zwei Spritzdüsenabschnitte sowie zwei Düsenköpfe,
- **Figur 4**: eine Explosionsdarstellung der in Figur 3 gezeigten Einheit,
- **Figur 5**: eine Einheit einer alternativen Ausführungsform einer erfindungsgemäßen Spritzdüse,
- **Figur 6**: die Einheit gemäß Figur 5 in einer Seitenansicht,

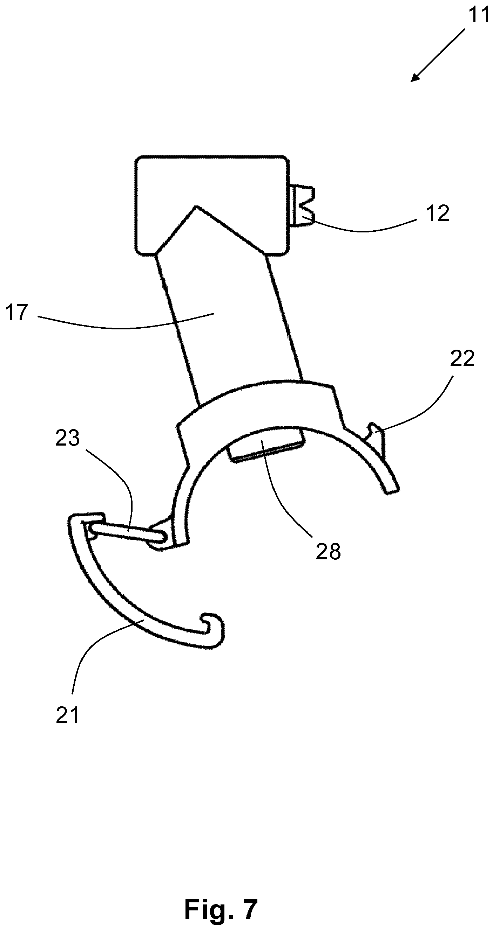

- **Figur 7**: einen Spritzdüsenabschnitt der in den Figuren 5 und 6 gezeigten Einheit, und
- **Figur 8**: eine alternative Ausführung einer erfindungsgemäßen Spritzdüse.

Zunächst sei darauf hingewiesen, dass in den Figuren teilweise nur ein Teil von mehreren gleichartigen Elementen (wie beispielsweise die Spritzdüsenrohre 8) mit einem Bezugszeichen versehen ist, um die Übersicht zu erhöhen. Prinzipiell handelt es sich bei gleichartig dargestellten Elementen jedoch um Elemente gleicher Art, auch wenn nicht alle derartigen Elemente mit einem Bezugszeichen versehen sind.

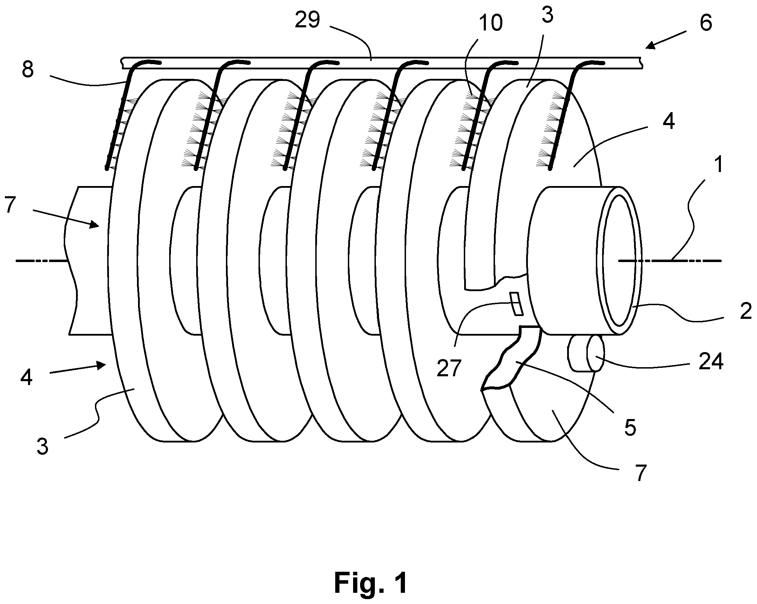

Figur 1 zeigt relevante Abschnitte bzw. Bestandteile eines Rotationsscheibenfilters. Der Rotationsscheibenfilter umfasst eine Trommel 2, die über nicht gezeigte Lagerungen drehbar in einem ebenfalls nicht gezeigten Rahmen bzw. Gestell gelagert ist. Am Außenumfang der Trommel 2 ist eine Vielzahl von Filterscheiben 3 befestigt (wobei in Figur 1 aus Übersichtsgründen lediglich zwei Filterscheiben 3 mit einem Bezugszeichen versehen sind). Die Filterscheiben 3 besitzen jeweils zwei im Wesentlichen kreisringförmig ausgebildete Filterflächen 4, die einen innenliegenden Hohlraum 5 begrenzen (sichtbar bei der rechten Filterscheibe 3, bei der ein Teil der Filterscheibe 3 weggelassen wurde, um ins Innere schauen zu können).

Selbstverständlich umfasst der Rotationsscheibenfilter weitere Bauteile, wie beispielsweise ein die Filterscheiben 3 umgebendes Behältnis (nicht gezeigt) für das zu reinigende Abwasser oder eine Antriebseinrichtung 24 (vorzugsweise in Form eines Elektromotors), mit dessen Hilfe die Trommel 2 und die daran befestigten Filterscheiben 3 in einer Rotationsbewegung um eine Drehachse 1 angetrieben werden.

Ferner weist der Rotationsscheibenfilter einen nicht gezeigten Zulauf für das zu filternde Abwasser sowie einen ebenfalls nicht gezeigten Ablauf für das Filtrat auf.

Ebenso ist eine nicht dargestellte Austragsvorrichtung vorhanden, mit deren Hilfe die von den Filterflächen 4 der Filterscheiben 3 zurückgehaltenen Feststoffe aus dem Rotationsscheibenfilter ausgetragen werden können.

Während der Filtration des zu filternden Abwassers strömt dieses über die Trommel 2 und letztendlich über die Abwasseröffnungen 27 in der Trommel 2 in die inneren Hohlräume 5 der einzelnen Filterscheiben 3 (auch deren Grundrahmen, die das die Filterflächen 4 bildende Filtermaterial tragen, weisen entsprechende Öffnungen auf).

Während das Filtrat durch die Filterflächen 4 der Filterscheiben 3 von den innerhalb der Filterscheiben 3 angeordneten Hohlräumen 5 nach außerhalb der Filterscheiben 3 strömt, werden Feststoffe bis zu einer bestimmten Partikelgröße von den Filterflächen 4 der Filterscheiben 3 zurückgehalten. Auf diese Weise erfolgt eine Trennung der Feststoffe vom Filtrat.

Um nun die Filterflächen 4 von den zurückgehaltenen Feststoffen reinigen zu können, weist der erfindungsgemäße Rotationsscheibenfilter eine Spritzdüsenanordnung 6 auf. Die Spritzdüsenanordnung 6 umfasst im gezeigten Ausführungsbeispiel eine zentrale Zuleitung 29 für eine Reinigungsflüssigkeit 10 (z.B. Wasser oder Filtrat), wobei nur ein Abschnitt der Zuleitung 29 gezeigt ist. Die Zuleitung 29 wird von einer nicht gezeigten Pumpe mit der Reinigungsflüssigkeit 10 gespeist, wobei die Reinigungsflüssigkeit 10 beispielsweise aus einem ebenfalls nicht gezeigten Vorratstank stammen kann.

Von der zentralen Zuleitung 29 zweigen mehrere Spritzdüsenrohre 8 ab, welche wiederum als Träger für jeweils mehrere Spritzdüsen 9 dienen. Die Spritzdüsenrohre 8 können ortsfest fixiert sein. Ebenso ist es denkbar, dass die Spritzdüsenrohre 8 um eine Schwenkachse, die beispielsweise durch den gezeigten Abschnitt der zentralen Zuleitung 29 verläuft, verschwenkbar sind und zwischen einer Parkstellung außerhalb der Filterscheiben 3 und der in Figur 1 gezeigten Reinigungsstellung bewegt werden können. In der Reinigungsstellung befinden sich die Spritzdüsen 9 mit Ausnahme der Spritzdüsen 9 am ersten und letzten Spritzdüsenrohr 8 zwischen jeweils zwei benachbarten Filterscheiben 3.

Wird nun über die Spritzdüsen 9 die Reinigungsflüssigkeit 10 auf die Außenseiten 7 der Filterscheiben 3 gespritzt, so durchdringt die Reinigungsflüssigkeit 10 die Filterscheiben 3 in Richtung der inneren Hohlräume 5 und führt schließlich zu einem Ablösen der sich auf der Innenseite der Filterscheiben 3 angesammelten Feststoffe. Die Feststoffe werden schließlich zusammen mit einem Teil der Reinigungsflüssigkeit 10 über die Trommel 2 bzw. eine innen verlaufende Auffangvorrichtung aufgefangen und nach außen abgeführt.

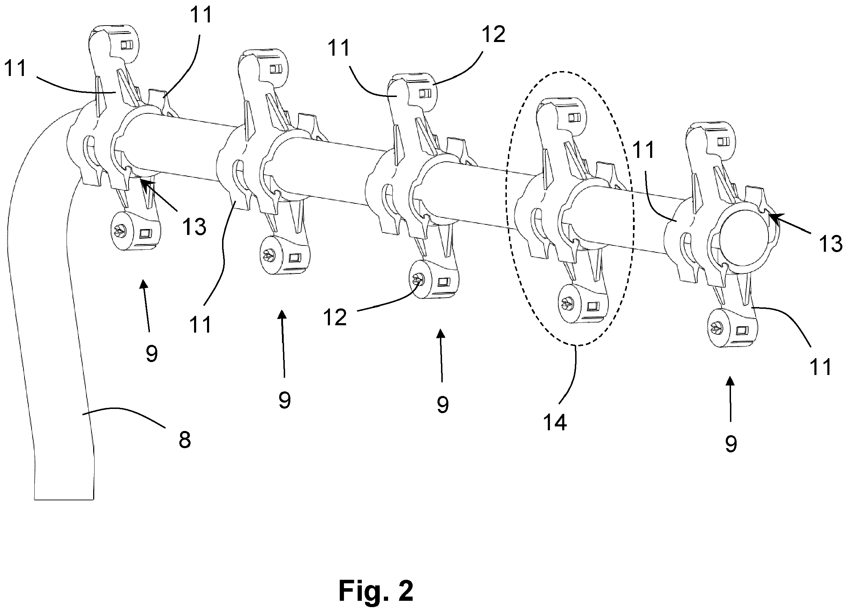

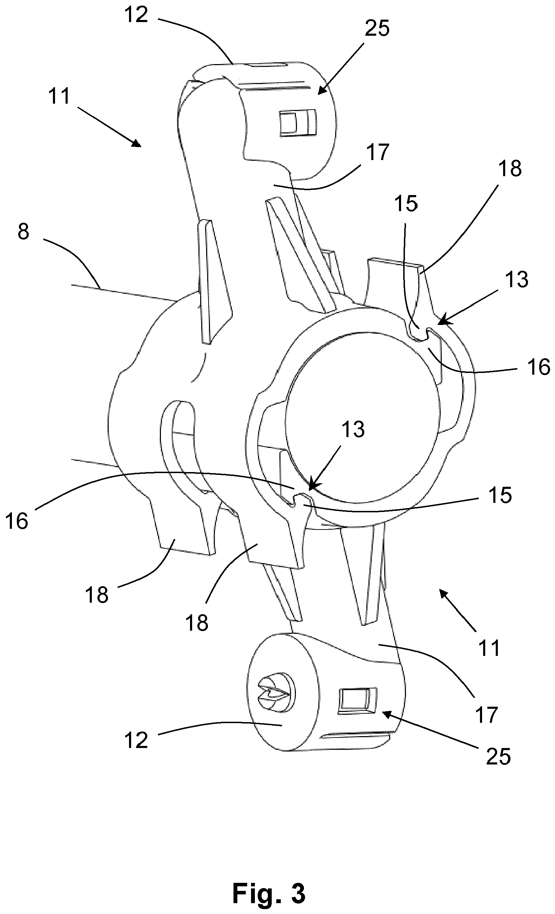

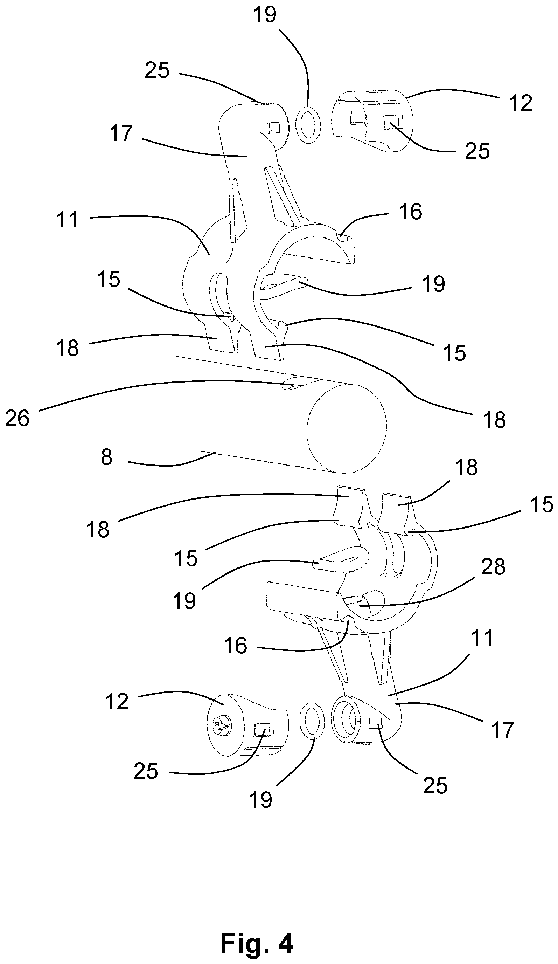

Ein erstes Ausführungsbeispiel der erfindungsgemäß ausgebildeten Spritzdüsen 9 zeigt die Zusammenschau der Figuren 2 bis 4, wobei Figur 2 einen Abschnitt eines Spritzdüsenrohrs 8 mit fünf daran befestigten Spritzdüsen 9 zeigt. In Figur 3 ist eine Spritzdüse 9 in ihrem auf dem Spritzdüsenrohr 8 montierten Zustand gezeigt, während Figur 4 eine Explosionsdarstellung der in Figur 3 dargestellten Spritzdüse 9 offenbart.

Wie den genannten Figuren zu entnehmen ist, umfasst jede Spritzdüse 9 zwei als Spritzdüsenarm ausgebildete Spritzdüsenabschnitte 11, die mit Hilfe einer formschlüssigen Verbindung 13 miteinander und gleichzeitig auch mit dem Spritzdüsenrohr 8 verbunden sind und hierdurch eine Einheit 14 bilden. Ferner weist jeder Spritzdüsenabschnitt 11 einen nach außen abragenden Armabschnitt 17 auf, welcher an seinem dem Spritzdüsenrohr 8 abgewandten Ende mit einem Düsenkopf 12 verbunden ist, über den die über das Spritzdüsenrohr 8 zugeführte Reinigungsflüssigkeit 10 schließlich aus der Spritzdüse 9 austritt und auf die Filterfläche 4 trifft. Die Verbindung zwischen dem Düsenkopf 12 und dem Spritzdüsenrohr 8 erfolgt vorzugsweise mit Hilfe des beispielsweise in Figur 4 gezeigten Clipsmechanismus 25, so dass der Düsenkopf 12 bei Bedarf einfach von dem Spritzdüsenabschnitt 11 entfernt und durch einen neuen ersetzt werden kann.

Beim Betrieb der Spritzdüsenanordnung 6 strömt die Reinigungsflüssigkeit 10 vom Spritzdüsenrohr 8 kommend über jeweils eine Öffnung 26 des Spritzdüsenrohrs 8 in den Armabschnitt 17 des jeweiligen Spritzdüsenabschnitts 11 und von dort in den Düsenkopf 12. Vorzugsweise weist der Spritzdüsenabschnitt 11 einen rohrförmigen Stutzen 28 auf, der bei montierter Spritzdüse 9 in die korrespondierende Öffnung 26 des Spritzdüsenrohrs 8 ragt. Das Zusammenwirken von Stutzen 28 und Öffnung 26 wirkt gleichzeitig als Verdrehsicherung der Spritzdüse 9 gegenüber dem Spritzdüsenrohr 8.

Um einen ungewollten Austritt der Reinigungsflüssigkeit 10 zu verhindern, sind zwischen den Spritzdüsenabschnitten 11 und dem Spritzdüsenrohr 8 sowie zwischen den Düsenköpfen 12 und den Spritzdüsenabschnitten 11 jeweils Dichtelemente 19, beispielsweise in Form von Dichtringen, angeordnet.

Ein erstes Ausführungsbeispiel der erfindungsgemäßen formschlüssigen Verbindung 13 zwischen den Spritzdüsenabschnitten 11 untereinander und gleichzeitig mit dem Spritzdüsenrohr 8 ist der Zusammenschau der Figuren 3 und 4 zu entnehmen. Wie diese Figuren zeigen, weist jeder Spritzdüsenabschnitt 11 an seinem dem jeweiligen Düsenkopf 12 abgewandten Ende zwei Rastabschnitte 15 sowie zwei Halteabschnitte 16 auf. Werden nun die beiden in Figur 4 gezeigten Spritzdüsenabschnitte 11 aufeinander zu und damit an das Spritzdüsenrohr 8 bewegt, so rasten die Rastabschnitte 15 des ersten Spritzdüsenabschnitts 11 in die Halteabschnitte 16 des zweiten Spritzdüsenabschnitts 11 sowie die Rastabschnitte 15 des zweiten Spritzdüsenabschnitts 11 in die Halteabschnitte 16 des ersten Spritzdüsenabschnitts 11 ein. Beide Spritzdüsenabschnitte 11 werden also mit Hilfe der Rastabschnitte 15 und der Halteabschnitte 16 formschlüssig miteinander gekoppelt und umgreifen letztendlich das Spritzdüsenrohr 8. Durch die formschlüssige Verbindung 13 werden die Spritzdüsenabschnitte 11 hierbei derart gegen das Spritzdüsenrohr 8 gepresst, dass die formschlüssige Verbindung 13 auch die Verbindung der Spritzdüsenabschnitte 11 mit dem Spritzdüsenrohr 8 bewirkt. Die formschlüssige Verbindung 13 verbindet also die Spritzdüsenabschnitte 11 zu einer Einheit 14 und gleichzeitig die Spritzdüse 9 als Ganzes mit dem Spritzdüsenrohr 8.

Um die Spritzdüse 9 wieder vom Spritzdüsenrohr 8 zu lösen, muss lediglich die formschlüssige Verbindung 13 gelöst werden, wobei hierfür vorzugsweise Betätigungsabschnitte 18 vorhanden sind, welche mit dem Finger mit einer Kraft beaufschlagt werden können. Dies bewirkt schließlich, dass sich die Rastabschnitte 15 von den Halteabschnitten 16 entfernen, so dass beide Abschnitte 15, 16 außer Eingriff miteinander gelangen. Anschließend können die beiden Spritzdüsenabschnitte 11 voneinander wegbewegt und hierbei vom Spritzdüsenrohr 8 entfernt werden.

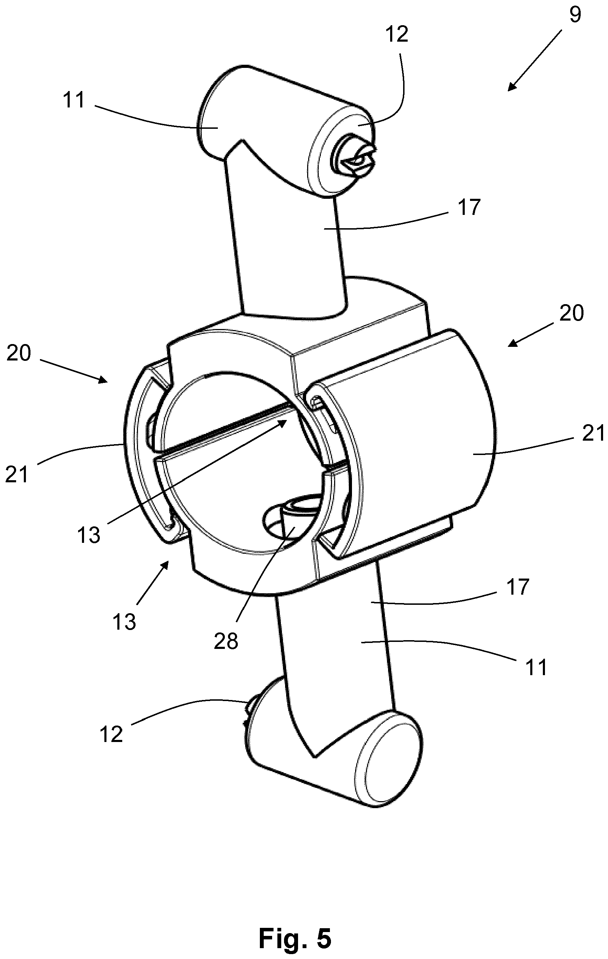

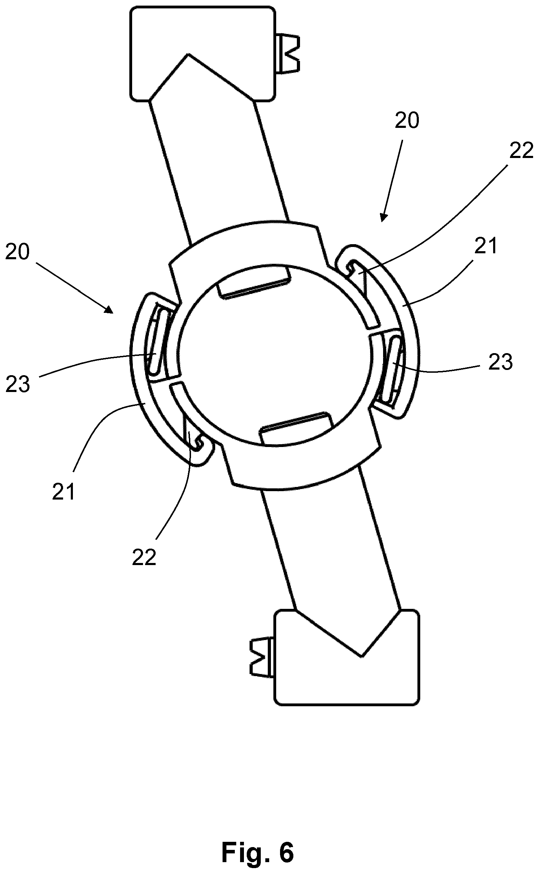

Ein weiteres Ausführungsbeispiel einer formschlüssigen Verbindung 13 zeigen die Figuren 5 (perspektivische Ansicht einer Spritzdüse 9 ohne Spritzdüsenrohr 8), 6 (Seitenansicht der in Figur 5 gezeigten Spritzdüse 9) und 7 (ein Spritzdüsenabschnitt 11 mit Düsenkopf 12 der in den Figuren 5 und 6 gezeigten Spritzdüse 9 in der Seitenansicht).

Anstelle der in den vorherigen Figuren gezeigten formschlüssigen Verbindung 13, welche jeweils Rastabschnitte 15 und Halteabschnitte 16 umfasste, wird die formschlüssige Verbindung 13 im zweiten Ausführungsbeispiel durch eine Spannverriegelung 20 gebildet. Die Spannverriegelung 20, von denen zwei vorhanden sind, umfasst im gezeigten Beispiel jeweils einen Spannarm 21 und einen Vorsprung 22, die jeweils Bestandteil unterschiedlicher Spritzdüsenabschnitte 11 sind. Ein Spannarm 21 eines Spritzdüsenabschnitts 11 wirkt also mit dem Vorsprung 22 des anderen Spritzdüsenabschnitts 11 zusammen und umgekehrt.

Wie die Figuren ferner zeigen, ist zudem ein Federmechanismus 23 (z.B. in Form einer Ringfeder) vorhanden, der die Spannverriegelung 20 in ihrem in den Figuren 5 und 6 gezeigten Montagezustand unter Spannung hält. Dies bewirkt zum einen, dass die Spannverriegelung 20 nur durch Überwindung der Haltekraft des Federmechanismus 23 wieder gelöst werden kann. Zum anderen werden beide Spritzdüsenabschnitte 11 gegen das nicht gezeigte Spritzdüsenrohr 8 gepresst, was die nötige Dichtigkeit zwischen dem Spritzdüsenrohr 8 und der Spritzdüse 9 sicherstellt (das nicht gezeigte Spritzdüsenrohr 8 verläuft auch hier selbstverständlich durch die kreisförmige Öffnung in der Mitte der Spritzdüse 9, vergleichbar zum ersten Ausführungsbeispiel).

Die zuvor beschriebenen Ausführungsbeispiele zeigen eine Lösung, bei der beide Spritzdüsenabschnitte 11 als Spritzdüsenarm mit jeweils einem Düsenkopf 12 ausgebildet sind.

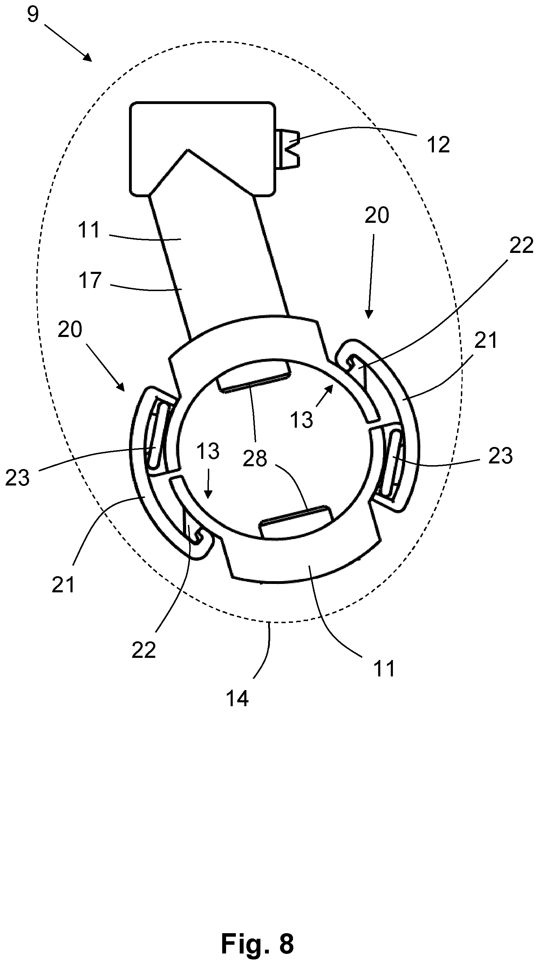

Alternativ ist es ebenso möglich, dass nur eine der mehreren Spritzdüsenabschnitte 11 als Spritzdüsenarm ausgebildet ist. Eine derartige Lösung ist in Figur 8 gezeigt. Wie dieser Figur zu entnehmen ist, umfasst der zweite Spritzdüsenabschnitt 11 keinen Armabschnitt 17. Vielmehr dient dieser lediglich als Gegenpart zum ersten Spritzdüsenabschnitt 11, der den einzigen Düsenkopf 12 der gezeigten Spritzdüse 9 umfasst. Beide Spritzdüsenabschnitte 11 können den bereits genannten Stutzen 28 aufweisen, falls entsprechende Öffnungen 26 in dem Spritzdüsenrohr 8 vorhanden sind. Falls das Spritzdüsenrohr 8 hingegen nur eine Öffnung 26 für den ersten Spritzdüsenabschnitt 11 aufweist, kann auf den Stutzen 28 des zweiten Spritzdüsenabschnitts 11 verzichtet werden. Falls er vorhanden ist, ist er selbstverständlich flüssigkeitsdicht auszubilden, um ein ungewolltes Austreten von Reinigungsflüssigkeit 10 im Bereich des Stutzens 28 zu verhindern.

Die Ausführung gemäß Figur 8 lässt sich sinngemäß natürlich auch auf die in den Figuren 2 bis 4 gezeigten Ausführungsbeispiele übertragen, die statt einer Spannverriegelung 20 eine Rastverriegelung zeigt. Auch hier ist es also denkbar, dass nur einer der beiden Spritzdüsenabschnitte 11 einen Armabschnitt 17 mit einem Düsenkopf 12 umfasst.

Die vorliegende Erfindung ist nicht auf die dargestellten und beschriebenen Ausführungsbeispiele beschränkt. Abwandlungen im Rahmen der Patentansprüche sind ebenso möglich wie eine beliebige Kombination der beschriebenen Merkmale, auch wenn sie in unterschiedlichen Teilen der Beschreibung bzw. den Ansprüchen oder in unterschiedlichen Ausführungsbeispielen dargestellt und beschrieben sind, vorausgesetzt, dass kein Widerspruch zur Lehre der unabhängigen Ansprüche entsteht.

### Bezugszeichenliste

- 1: Drehachse
- 2: Trommel
- 3: Filterscheibe
- 4: Filterfläche
- 5: Hohlraum
- 6: Spritzdüsenanordnung
- 7: Außenseite
- 8: Spritzdüsenrohr
- 9: Spritzdüse
- 10: Reinigungsflüssigkeit
- 11: Spritzdüsenabschnitt
- 12: Düsenkopf
- 13: formschlüssige Verbindung
- 14: Einheit
- 15: Rastabschnitt
- 16: Halteabschnitt
- 17: Armabschnitt
- 18: Betätigungsabschnitt
- 19: Dichtelement
- 20: Spannverriegelung
- 21: Spannarm
- 22: Vorsprung
- 23: Federmechanismus
- 24: Antriebseinrichtung
- 25: Clipsmechanismus
- 26: Öffnung
- 27: Abwasseröffnung
- 28: Stutzen
- 29: zentrale Zuleitung

## Patentansprüche

1. Rotationsscheibenfilter zur Filtration von Abwasser,
- wobei der Rotationsscheibenfilter eine um eine Drehachse (1) drehbar gelagerte Trommel (2) aufweist,
- wobei der Rotationsscheibenfilter eine Vielzahl von nebeneinander und um die Trommel (2) angeordnete Filterscheiben (3) aufweist, die an der Trommel (2) befestigt und gemeinsam mit dieser mit Hilfe einer Antriebseinrichtung (24) des Rotationsscheibenfilters in eine Drehbewegung versetzbar sind,
- wobei jede Filterscheibe (3) jeweils einen durch Filterflächen (4) zumindest teilweise begrenzten inneren Hohlraum (5) aufweist,
- wobei die Hohlräume (5) der Filterscheiben (3) mit der Trommel (2) in Fluidverbindung stehen, so dass das zu filtrierende Abwasser ausgehend vom Inneren der Trommel (2) in die Hohlräume (5) und das Filtrat von dort über die Filterflächen (4) nach außen strömen kann,
- wobei der Rotationsscheibenfilter eine Spritzdüsenanordnung (6) zur Reinigung einer dem jeweiligen Hohlraum (5) abgewandten Außenseite (7) der Filterflächen (4) aufweist,
- wobei die Spritzdüsenanordnung (6) Spritzdüsenrohre (8) umfasst, die sich während des Betriebs der Spritzdüsenanordnung (6) zumindest zeitweise zwischen jeweils zwei benachbarte Filterscheiben (3) erstrecken,
- wobei die Spritzdüsenrohre (8) jeweils mehrere Spritzdüsen (9) umfassen, mit deren Hilfe während des Betriebs der Spritzdüsenanordnung (6) eine den Spritzdüsenrohren (8) zugeführte Reinigungsflüssigkeit (10) auf die der jeweiligen Spritzdüse (9) zugewandten Außenseite (7) einer Filterfläche (4) gespritzt werden kann,
**dadurch gekennzeichnet,**
- **dass** die Spritzdüsen (9) jeweils wenigstens zwei Spritzdüsenabschnitte (11) umfassen,
- wobei zumindest ein Teil der Spritzdüsenabschnitte (11) einen Düsenkopf (12) aufweist,
- wobei die Spritzdüsen (9) eine formschlüssige Verbindung (13) umfassen, mit deren Hilfe die Spritzdüsenabschnitte (11) mit den Spritzdüsenrohren (8) verbunden sind,
- wobei die Spritzdüsen (9) nach Lösen der formschlüssigen Verbindung (13) von dem jeweiligen Spritzdüsenrohr (8) entfernt werden können, und
- wobei die Reinigungsflüssigkeit (10) beim Betrieb der Spritzdüsenanordnung (6) vom Spritzdüsenrohr (8) kommend durch zumindest einen Teil der mit dem Spritzdüsenrohr (8) verbundenen Spritzdüsenabschnitte (11) zu den jeweiligen Düsenköpfen (12) strömt und von dort auf die Außenseite (7) einer der Filterflächen (4) trifft.

2. Rotationsscheibenfilter gemäß dem vorangegangenen Anspruch, **dadurch gekennzeichnet, dass** jeweils zwei Spritzdüsenabschnitte (11) mit Hilfe der formschlüssigen Verbindung (13) zu einer Einheit (14) zusammengefasst sind, wobei die beiden Spritzdüsenabschnitte (11) insbesondere als Spritzdüsenarme ausgebildet sind, die jeweils einen Düsenkopf (12) aufweisen und bezüglich des die Spritzdüsenabschnitte (11) tragenden Spritzdüsenrohrs (8) vorzugsweise in gegenüberliegende Richtungen von dem Spritzdüsenrohr (8) abstehen.

3. Rotationsscheibenfilter gemäß einem der vorangegangenen Ansprüche, **dadurch gekennzeichnet, dass** die Spritzdüsenabschnitte (11) einer Einheit (14) mit Hilfe der formschlüssigen Verbindung (13) direkt miteinander verbunden sind.

4. Rotationsscheibenfilter gemäß einem der vorangegangenen Ansprüche, **dadurch gekennzeichnet, dass** die formschlüssige Verbindung (13) durch einen Rastmechanismus gebildet ist, wobei der Rastmechanismus einen Rastabschnitt (15) umfasst, der Bestandteil einer ersten der beiden Spritzdüsenabschnitte (11) einer Einheit (14) ist, dass der Rastmechanismus einen Halteabschnitt (16) umfasst, der Bestandteil des zweiten Spritzdüsenabschnitts (11) der Einheit (14) ist, wobei der Rastabschnitt (15) und der Halteabschnitt (16) zusammenwirken und gemeinsam die formschlüssige Verbindung (13) bilden, und wobei die Spritzdüsenabschnitte (11) der Einheit (14) vorzugsweise mit Hilfe des Rastmechanismus gegen das die Einheit (14) tragende Spritzdüsenrohr (8) gepresst sind.

5. Rotationsscheibenfilter gemäß einem der vorangegangenen Ansprüche, **dadurch gekennzeichnet, dass** jeder Spritzdüsenabschnitt (11) wenigstens einen, vorzugsweise mehrere, Rastabschnitte (15) und einen, vorzugsweise mehrere, Halteabschnitte (16) umfasst, wobei der bzw. die Rastabschnitte (15) des ersten Spritzdüsenabschnitts (11) einer Einheit (14) mit der bzw. den Halteabschnitten (16) des zweiten Spritzdüsenabschnitts (11) zusammenwirkt bzw. zusammenwirken, und wobei der bzw. die Rastabschnitte (15) des zweiten Spritzdüsenabschnitts (11) der Einheit (14) mit dem bzw. den Halteabschnitten (16) des ersten Spritzdüsenabschnitts (11) zusammenwirkt bzw. zusammenwirken.

6. Rotationsscheibenfilter gemäß einem der vorangegangenen Ansprüche, **dadurch gekennzeichnet, dass** zumindest ein Spritzdüsenabschnitt (11) einer jeden Spritzdüse (9) jeweils einen von dem Spritzdüsenrohr (8), mit dem er verbunden ist, abstehenden Armabschnitt (17) aufweist, wobei der entsprechende Spritzdüsenabschnitt (11) einteilig ausgebildet ist und den Armabschnitt (17), einen oder mehrere Rastabschnitte (15) und/oder einen oder mehrere Halteabschnitte (16) umfasst, und wobei der Armabschnitt (17) mit einem der Düsenköpfe (12) verbunden ist.

7. Rotationsscheibenfilter gemäß einem der vorangegangenen Ansprüche, **dadurch gekennzeichnet, dass** sich der Rastabschnitt (15) und/oder der Halteabschnitt (16), insbesondere ausgehend vom Armabschnitt (17), in Umfangsrichtung um einen Abschnitt eines der Spritzdüsenrohre (8) erstreckt und/oder dass der Rastabschnitt (15) durch einen Rasthaken gebildet ist.

8. Rotationsscheibenfilter gemäß einem der vorangegangenen Ansprüche, **dadurch gekennzeichnet, dass** der Rastabschnitt (15) einen, vorzugsweise vom Spritzdüsenrohr (8) abstehenden, Betätigungsabschnitt (18) aufweist, mit dessen Hilfe der Rastabschnitt (15) händisch vom Halteabschnitt (16) wegbewegt werden kann, um die formschlüssige Verbindung (13) durch die Bewegung zu lösen.

9. Rotationsscheibenfilter gemäß einem der vorangegangenen Ansprüche, **dadurch gekennzeichnet, dass** jeweils ein Düsenkopf (12) mit einem Spritzdüsenabschnitt (11) verschraubt, mit diesem über einen Clipsmechanismus (25) verbunden oder mit diesem verpresst, vorzugsweise in diesen eingepresst, ist.

10. Rotationsscheibenfilter gemäß einem der vorangegangenen Ansprüche, **dadurch gekennzeichnet, dass** jede Spritzdüse (9) ausschließlich zwei, jeweils einteilige, Spritzdüsenabschnitte (11), einen, vorzugsweise zwei, Düsenköpfe (12) und mehrere Dichtelemente (19) umfasst, wobei jeweils ein Dichtelement (19) zwischen dem jeweiligen Spritzdüsenabschnitt (11) und dem Spritzdüsenrohr (8) und jeweils ein Dichtelement (19) zwischen dem jeweiligen Spritzdüsenabschnitt (11) und dem mit diesem verbundenen Düsenkopf (12) angeordnet ist.

11. Rotationsscheibenfilter gemäß einem der vorangegangenen Ansprüche, **dadurch gekennzeichnet, dass** die formschlüssige Verbindung (13) durch eine Spannverriegelung (20) gebildet ist, wobei die Spannverriegelung (20) pro Einheit (14) einen, vorzugsweise mehrere, Spannarme (21) und einen, vorzugsweise mehrere, Vorsprünge (22) umfasst, wobei jeweils zumindest ein Spannarm (21) mit wenigstens einem Vorsprung (22) in Eingriff steht, und wobei die Spritzdüsenabschnitte (11) der Einheit (14) vorzugsweise durch das Zusammenwirken der Spannarme (21) mit den Vorsprüngen gegen das die Einheit (14) tragende Spritzdüsenrohr (8) gepresst sind.

12. Rotationsscheibenfilter gemäß einem der vorangegangenen Ansprüche, **dadurch gekennzeichnet, dass** die Spannverriegelung (20) einen Federmechanismus (23) aufweist, mit dessen Hilfe die Spannverriegelung (20) unter Spannung gehalten wird, wobei die Spannverriegelung (20) unter Überwindung der Federkraft des Federmechanismus (23) geöffnet werden kann.

13. Rotationsscheibenfilter gemäß einem der vorangegangenen Ansprüche, **dadurch gekennzeichnet, dass** jeder Spannarm (21) einer Einheit (14) einen Spannarm (21) und einen Vorsprung (22) aufweist, wobei der Spannarm (21) des ersten Spritzdüsenabschnitts (11) der Einheit (14) mit einem Vorsprung (22) der zweiten Einheit (14) und der Spannarm (21) des zweiten Spritzdüsenabschnitts (11) der Einheit (14) mit einem Vorsprung (22) der ersten Einheit (14) in Wirkverbindung steht.

14. Rotationsscheibenfilter gemäß einem der vorangegangenen Ansprüche, **dadurch gekennzeichnet, dass** die Spannarme (21) einer Einheit (14) auf gegenüberliegenden Seiten des die Einheit (14) tragenden Spritzdüsenrohrs (8) angeordnet sind und/oder dass die Vorsprünge (22) einer Einheit (14) auf gegenüberliegenden Seiten des die Einheit (14) tragenden Spritzdüsenrohrs (8) angeordnet sind und/oder dass die Rastabschnitte (15) einer Einheit (14) auf gegenüberliegenden Seiten des die Einheit (14) tragenden Spritzdüsenrohrs (8) angeordnet sind und/oder dass die Halteabschnitte (16) einer Einheit (14) auf gegenüberliegenden Seiten des die Einheit (14) tragenden Spritzdüsenrohrs (8) angeordnet sind.

15. Spritzdüse (9) für einen Rotationsscheibenfilter, der der Filtration von Abwasser dient,
**dadurch gekennzeichnet,**
**dass** die Spritzdüse (9) ein oder mehrere Merkmale der Spritzdüse (9) gemäß einem der vorangegangenen Ansprüche aufweist.
